# EUROPÄISCHE PATENTSCHRIFT

(11) **EP 2 601 705 B1**
(45) Veröffentlichungstag und Bekanntmachung des Hinweises auf die Patenterteilung: **07.10.2015**
(21) Anmeldenummer: 11752480.1
(22) Anmeldetag: 30.08.2011
(51) Int. Cl.: F28F 3/12, B21D 53/06, F28F 9/02, F28F 9/26, F28F 19/06, H01M 10/613, H01M 10/625, H01M 10/647, H01M 6/50, H01M 10/6551, H01M 10/6555, H01M 10/6556, F28D 1/047, H01M 10/0525, F28D 21/00

(54) **BATTERIEZELLEN-KÜHLMODUL UND VERFAHREN ZUM HERSTELLEN EINES BATTERIEZELLEN-KÜHLMODULS**
BATTERY CELL COOLING MODULE AND METHOD FOR PRODUCING A BATTERY CELLCOOLING MODULE
MODULE DE REFROIDISSEMENT D'ÉLÉMENT DE BATTERIE ET PROCÉDÉ DE FABRICATION D'UN MODULE DE REFROIDISSEMENT D'ÉLÉMENT DE BATTERIE

(30) Priorität: 02.09.2010 DE 102010036151
(43) Veröffentlichungstag der Anmeldung: 12.06.2013
(73) Patentinhaber: Akasol GmbH, 64293 Darmstadt (DE)
(72) Erfinder: VON BORCK, Felix, 64289 Darmstadt (DE); EBERLEH, Björn, 64665 Alsbach-Hähnlein (DE)
(74) Vertreter: Manitz, Finsterwald & Partner GbR
(86) Internationale Anmeldenummer: PCT/EP2011/004361
(87) Internationale Veröffentlichungsnummer: WO 2012/028298

(56) Entgegenhaltungen:
- WO-A1-2009/146876
- WO-A1-2010/069713
- WO-A1-2010/121832
- WO-A2-03/103083
- JP-A- 2000 108 687
- US-A1- 2001 031 392
- US-A1- 2006 093 899
- US-A1- 2007 018 610
- US-A1- 2009 023 056

## Beschreibung

Die vorliegende Anmeldung betrifft ein Verfahren zur Herstellung eines Kühlmoduls und ein entsprechendes Kühlmodul für ein aus mehreren Zellen bestehendes Batteriemodul, insbesondere mit Akkumulatoren, insbesondere Lithiumionenzellen, die zur Bildung einer Traktionsbatterie bzw. eines Traktionsbatteriemoduls für Fahrzeuge mit elektrischem Antriebsstrang verwendet werden. Solche Batteriemodule können z.B. in elektrischen Fahrzeugen, Hybridfahrzeugen mit Verbrennungsmotoren oder Hybridfahrzeugen mit Brennstoffzellen eingesetzt werden. Durch den modularen Aufbau eines erfindungsgemäßen Batteriemoduls kann es auch für andere Zwecke verwendet werden, z.B. bei stationären Anwendungen oder Kleintraktionsanwendungen, wie beispielsweise in einem Rollstuhl.

In der Druckschrift WO 2010/121832 wird ein Kühlmodul für ein aus mehreren Zellen bestehendes Batteriemodul, insbesondere mit Akkumulatoren, insbesondere Lithiumionenzellen beschrieben, die zur Bildung einer Traktionsbatterie bzw. eines Traktionsbatteriemoduls für Fahrzeuge mit elektrischem Antriebsstrang verwendet werden.

Ein Batteriemodulsystem, das aus mehreren gleichartigen Batteriemodulen zusammengebaut ist, kann beispielsweise ausgelegt werden, um einen Leistungsbereich mit einem Energieinhalt zwischen 1 kWh und 400 kWh oder mehr abzudecken. Wenn beispielsweise ein Batteriemodulsystem für eine Dauerleistung von 20 kW ausgelegt ist, können dennoch zu Beschleunigungszwecken Spitzenleistungen von beispielsweise 100 kW kurzfristig von der Batterie abverlangt werden, wodurch sich ausgezeichnete Beschleunigungswerte erzielen lassen. Im Ladebetrieb kann beispielsweise mit einer Ladeleistung von 40 kW gearbeitet werden.

Die oben angegebenen Werte sind rein beispielhaft, stellen aber andererseits Werte dar, die durchaus mit kommerziell verfügbaren Lithiumionenbatterien erreicht werden können.

Das Kühlmodul gemäß der oben genannten PCT-Anmeldung soll kompakt aufgebaut und thermisch optimiert ausgelegt sein, und insbesondere so ausgelegt, dass die Betriebstemperatur des Batteriemoduls bzw. des Batteriemodulsystems innerhalb enger Grenzen gehalten werden kann, um das lokale Überhitzen einzelner Zellen, erhöhte Temperaturen einer oder mehrerer Zellen oder den Betrieb bei zu niedrigen Zelltemperaturen möglichst zu vermeiden.

Um diese Aufgabe zu lösen, wird in der genannten PCT-Anmeldung ein Kühlmodul für ein aus mehreren Zellen bestehendes Batteriemodul vorgesehen, dass dadurch gekennzeichnet ist, dass das Kühlmodul an mindestens ersten und zweiten einander gegenüberliegenden Seiten Kühlplatten aufweist und mit sich zwischen diesen Seiten erstreckenden wärmeleitenden Verbindungsplatten versehen ist, die zwischen sich die Zellen aufnehmenden Fächer bilden, wobei das Kühlmodul vorzugsweise in etwa qüaderförmig ist.

In der deutschen Patentanmeldung der Akasol Engineering GmbH mit dem amtlichen Aktenzeichen

DE 10 2009 018 787.1 wird ein Verfahren zur Herstellung eines Kühlmoduls für eine wieder aufladbare Batterie vorgesehen, wobei das Kühlmodul in etwa quaderförmig ist und eine Flüssigkeitskühlung an mindestens drei aufeinander folgenden Seiten aufweist, wobei eine in etwa rechteckige Blechtafel oder ein etwa rechteckiger Bereich eines Blechstreifens verpresst wird, um einen rillenförmigen Eingangsbereich und einen rillenförmigen Ausgangsbereich an zwei gegenüberliegenden Seiten des Rechtecks sowie mehrere sich zwischen dem Eingangsbereich und dem Ausgangsbereich zumindest im Wesentlichen parallel zueinander erstreckenden Rillen auszubilden. Die rechteckige Tafel bzw. der rechteckige Bereich des Streifens wird anschließend an mindestens zwei Stellen umgebogen, um zwei im Wesentlichen rechtwinklige Ecken auszubilden.

Ein solches Verfahren lässt sich reproduzierbar in einer Produktionsanlage kostengünstig durchführen, und zwar mit sehr wenig Materialabfall, wodurch eine Serienfertigung von Kühlmodulen in größeren Stückzahlen wirtschaftlich möglich ist. Durch die Verwendung von Blech bzw. Aluminium oder einer Al-Legierung als Ausgangsmaterial kann mit relativ dünnem Blech, z.B. mit einer Dicke von etwa 1 mm, ein steifes Gebilde erzeugt werden, da die Rippen nicht nur der Kühlung, sondern auch der Versteifung dienen. Ferner führt die dünnwandige Konstruktion zu einem leichtgewichtigen Kühlmodul. Die Verwendung von Alublech fördert die Reduzierung von Gewicht.

Die Betriebstemperatur der einzelnen Batteriezellen soll jedoch einen Arbeitsbereich von z.B. 18° bis 25° C nicht überschreiten, da ansonsten die Lebensdauer der einzelnen Batteriezellen eines Batteriemoduls zum Teil drastisch reduziert werden können. Dadurch, dass in vorherigen Kühlmodulen die Kühlbleche typischerweise nachträglich mit Kühlkreisläufen versehen werden, um die Kühlung der Batteriezellen zu verwirklichen, kann es zu Problemen mit der Kühlung kommen, da die thermische Übertragung des Kühlmittels nicht immer ausreichend gewährleistet werden kann.

Die JP2000108687 sowie die WO 03/103083 A2 offenbaren jeweils Kühlmodule für zylindrische Batteriezellen, welches Kühlmodule aus nur einem Hohlprofil gebildet werden. Die WO 2009/146876 A1 offenbart ein Kühlvorrichtung für ein Fahrzeug. Die US 2009/023056 A1 offenbart ein Batteriepack mit Kühlprofilen. Ferner zeigt die US 2001/0031392 ein luft gekühltes Kühlmodul. Die US 2006/0093899 A1, US 20070018610 A1, sowie die WO 2010/069713 offenbaren verschiedene Batteriemodule mit. unterschiedlichen Auslegungen. Die WO2010/121832 offenbart ein Batteriemodul gemäß Art. 54(3) EPÜ.

Aufgabe der vorliegenden Anmeldung ist es, ein alternatives Verfahren zur Herstellung eines modularen Kühlmoduls bzw. eine alternative Konstruktion eines modularen Kühlmoduls vorzusehen, das bzw. die ebenfalls einen ausgezeichneten Wärmeaustausch zwischen den Batteriezellen und dem Kühlmittel erlaubt. Ferner soll auch bei der alternativen Auslegung eine extrem rationelle Herstellung gewährleisten werden, die mit wenig Materialaufwand und bei geringen wirtschaftlichen Kosten durchgeführt werden kann.

Zur Lösung dieser Aufgabe werden ein Verfahren zur Herstellung eines Batterie-Kühlmoduls sowie ein Batterie-Kühlmodul gemäß den unabhängigen Ansprüchen bereitgestellt.

Im nachfolgenden Text wird anstelle des Auselmeks "Batterie-Kühlmodul" stets der Auselmek "Kühlmodul" verwendet.

Vorteilhafte Ausführungsformen der Erfindung sind in den Unteransprüchen, der Beschreibung und den Figuren beschrieben.

Erfindungsgemäß wird ein Verfahren zum Herstellen eines Kühlmoduls bereitgestellt, in welchem Verfahren dem Kühlmodul die Form eines Körpers mit einem inneren Raum zur Aufnahme von Batteriezellen gegeben wird, wobei der Körper zwischen einem Einlassbereich und einem Auslassbereich eine oder mehrere parallel zueinander erstreckende Kühlpassagen aufweist und mindestens teilweise aus einer Länge oder aus mehreren Längen eines Hohlprofils gebildet wird.

Ein solches Verfahren lässt sich reproduzierbar in einer Produktionsanlage kostengünstig durchführen, und zwar mit sehr wenig Materialabfall, da nun einfach Hohlprofile verwendet werden können, die eine Kühlpassage aufweisen, und die in einem unabhängigen vorherigen Arbeitsschritt auf eine gewünschte Länge vorgefertigt werden können, bzw. in der Massenproduktion von Kühlmodulen in der gewünschten Länge angefertigt werden, wodurch eine Serienfertigung von Kühlmodulen in größeren Stückzahlen möglich ist.

Durch die Verwendung von z.B. Aluminium oder einer Al-Legierung als Ausgangsmaterial kann mit relativ dünnen Wanddicken der Hohlprofile von etwa 0,5 bis 5 mm ein steifes Gebilde erzeugt werden, da die Wände der Hohlprofile nicht nur zur Führung von Kühlmittel, sondern auch zur Versteifung des Kühlmoduls dienen. Ferner führt die dünnwandige Konstruktion zu einem leichtgewichtigen Kühlmodul. Die Verwendung von Alublech fördert die Reduzierung des Gewichts. Vorzugsweise werden leichte Metalle, wie z.B. Aluminium oder Magnesium bzw. deren Legierungen, als Ausgangsmaterial für die Hohlprofile verwendet. Bevorzugt werden Materialien verwendet, die eine hohe Wärmeleitfähigkeit besitzen (z.B. Alu ≈ 200 W/mK).

Hohlprofile können einfach in einem Strangpressverfahren hergestellt werden. In einem solchen Verfahren können bei Temperaturen von etwa 700° C (Aluminium und dessen Legierungen) bis zu 1400°C (Stahl) in einem semikontinuierlichen Verfahren Stränge von Metall bzw. Metalllegierungen in eine vorgebare Form gezogen werden. Die Formen können Durchmesser von bis zu 400 mm aufweisen und mit Hohlräumen versehen werden. Die Form kann bei Bedarf mehrere 100 m lang gezogen werden. Das fertige Profil kann aber auch z.B. durch eine Säge ("fliegende Säge") auf eine gewünschte Länge unterteilt werden, sobald ein Strangabschnitt ausreichend erstarrt ist.

Erfindungsgemäß werden mindestens zwei Hohlprofile verwendet. Diese sind dazu ausgebildet, um an ihren Längsseiten miteinander verbunden zu werden. Dadurch, dass die Hohlprofile an ihren Längsseiten verbunden werden können, wird ein Kühlmodul zusätzlich versteift, was zu einem noch robusteren Aufbau führt.

Dadurch, dass das Kühlmodul durch mindestens zwei Hohlprofile hergestellt wird, kann ein modularer Aufbau des Kühlmoduls bewerkstelligt werden, da eine gewünschte Höhe des Kühlmoduls einfach durch die Auswahl einer vorgebaren Zahl an Hohlprofilen erzielt werden kann. Dies bedeutet, dass verschiedene Größen von Kühlmodulen in einer Produktionsanlage einfach hergestellt werden können, da für die einzelnen Batteriemodule immer das gleiche Ausgangsmaterial benützt werden kann, was je nach Bedarf auf eine gewünschte Länge zugeschnitten und in seiner Höhe durch die erforderliche Anzahl an Hohlprofilen einfach variiert werden kann.

Vorzugsweise werden die Hohlprofile durch Kleben und/oder durch Löten und/oder durch Schweißen und/ oder Verpressen und/ oder Verschrauben/Verklemmen und/oder Umspannen und/oder mittels Durchsetzfügen und/oder mittels einer Nut- und Federverbindung miteinander verbunden. So kann ein Verschieben der Hohlprofile relativ zueinander einfach und kostengünstig vermieden werden sowie ein Zusammenhalt in einer Richtung senkrecht zu der Längsrichtung der Hohlprofile gewährleistet werden.

Erfindungsgemäß ist der Körper des Kühlmoduls quaderförmig und weist eine Flüssigkeitskühlung an mindestens drei aufeinander folgenden Seiten auf. Die oder jede Hohlprofillänge wird an mindestens zwei Stellen in eine U-Form umgebogen, um mindestens zwei üblicherweise zumindest im Wesentlichen rechtwinklige Ecken auszubilden.

Alternativ können Hohlprofile auch an ihren aneinander stoßenden Enden untereinander fluidleitend verklebt, verlötet oder verschweißt werden, um ein im Wesentlichen rechtwinkliges Kühlmodul auszubilden.

Als Alternative hierzu könnten aufeinander folgende Hohlprofile mittels Bogenelementen fluidleitend aneinander geschlossen werden, um ein im Wesentlichen rechteckiges Kühlmodul auszubilden.

Bei allen drei vorgenannten Alternativen weist das Kühlmodul mindestens drei aufeinander folgende Seiten auf, die jeweils eine Kühlpassage haben. Dadurch kann bzw. können eine oder mehrere Batteriezellen von mindestens drei Seiten gekühlt werden. Der Einlassbereich und der Auslassbereich können so einfach auf einer Seite des Kühlmoduls vorgesehen werden, bevorzugt an der gleichen Seite des Kühlmoduls, wo die Anschlüsse der Pole der Batteriezellen vorgesehen sind.

Durch die Umbiegung des Hohlprofils bzw. durch das Verbinden von Hohlprofilen an Ihren Ecken wird ein mindestens drei Seiten aufweisendes quaderförmiges Kühlmodul gebildet, wodurch die Grundform des Körpers eines Kühlmoduls bzw. ein Teil der Hülle des Kühlmoduls in wirtschaftlicher Weise hergestellt wird. Die rechteckige Form ermöglicht es, dass das Kühlmodul mit rechteckigen Batteriezellen, wie sie standardmäßig hergestellt werden, verwendet werden kann.

Vorzugsweise können je nach Bedarf und Anzahl der verwendeten Hohlprofillängen diese vor oder nach deren Verbindung umgebogen werden. So kann gewährleistet werden, dass bei Verwendung von mehreren größeren Hohlprofillängen diese richtig gebogen werden, da es wirtschaftlicher ist, ab einer gewissen Hohlprofilgröße (z.B. Wanddicke von ≥ 2mm) diese separat zu biegen, um den Ausschuss an fehlgebogenen Hohlprofilen zu minimieren.

Je nach Art des Hohlprofils kann es aber auch einfacher sein, einzelne umgebogene Hohlprofile zu einem Kühlmodul zusammenzusetzen.

Erfindungsgemäß wird ein drei Seiten aufweisendes Kühlmodul anschließend mit Verbindungsblechen versehen. Diese werden an mindestens zwei gegenüberliegenden Seiten des Kühlmoduls und vorzugsweise an drei Seiten des Kühlmoduls wärmeleitend an die Hohlprofile angebracht und bilden dazwischen Fächer aus, die zur Aufnahme von Batteriezellen bemessen sind, wobei die Verbindungsbleche in parallelen Ebenen liegen, und die Kühlpassagen vorzugsweise parallel zu den parallelen Ebenen verlaufen.

Durch die Verwendung eines Verbindungsbleches können die Batteriezellen, die in ein Kühlfach eingesetzt werden, mindestens von einer ihrer großflächigen Seiten gekühlt werden. Dies ermöglicht eine noch genauere Steuerung der Betriebstemperatur der einzelnen Batteriezellen, da diese nun von ihrer Unter- bzw. Oberseite gekühlt werden. Die Kühlplatten können darüber hinaus zur Stabilisierung des Kühlmoduls führen. Die Verbindung der Zelle zur Kühlstruktur erfolgt über Anpressen oder wärmeleitfähige dünne, elektrisch isolierende Schichten (z.B. Klebstoffe, Klebefilme).

Vorzugsweise werden die Verbindungsbleche in Führungsnuten eingesetzt, die sich in Längsrichtung der Hohlprofillänge erstrecken. Nach dem Einsetzen können die Verbindungsbleche durch Löten, Schweißen, Kleben, Reibkräfte oder anderweitig in den Führungsnuten befestigt werden, um einen noch besseren Wärmeübertrag zwischen den Hohlprofilen und den Verbindungsblechen zu gewährleisten. Es kann auch eine Wärmeübertragungspaste in oder an der Nut vorgesehen werden, die einen Wärmeaustausch zwischen dem Verbindungsblech und dem Hohlprofil verbessert.

Erfindungsgemäß weist die Hohlprofillänge mindestens einen Kühlflügel auf, wobei der Kühlflügel an Stellen ausgeklinkt wird, an denen die Hohlprofillänge umgebogen wird.

Die Kühlflügel können so im Strangpressschritt bei der Herstellung der Hohlprofile vorgesehen werden und gewährleisten so einen noch besseren Wärmeübertrag von der Wärme der Batteriezellen, die in ein erfindungsgemäßes Kühlmodul eingesetzt werden können, zu dem Kühlmittel, welches durch die Kühlpassage(n) geführt werden kann.

In einer besonders bevorzugten Ausführungsform wird im Einlassbereich ein Verteiler vorgesehen, der in etwa senkrecht zu den einzelnen Kühlpassagen steht und im Betrieb ein Kühlmittel in die einzelnen Kühlpassagen verteilt, und/oder im Auslassbereich wird ein Sammler vorgesehen, der in etwa senkrecht zu den Kühlpassagen steht und im Betrieb das Kühlmittel von den einzelnen Kühlpassagen aufnimmt und zu einem Auslass leitet.

Der Verteiler kann somit auf einfache Weise die einzelnen Kühlpassagen der einzelnen Hohlprofile mit Kühlmittel versorgen und so sicherstellen, dass Batteriezellen, welche in das Kühlmodul eingebaut werden können, auf einfache Weise gekühlt werden. Der Sammler kann das erwärmte Kühlmittel an einem Punkt sammeln und von den Kühlpassagen einfach wegleiten.

Das Kühlmittel kann vom Sammler zu einem Wärmetauscher geführt werden, um auf die gewünschte Betriebstemperatur gebracht zu werden, bevor das Kühlmittel (wieder) in den Verteiler geführt wird. Als Kühlmittel wird bevorzugt ein Kühlmittel zum Einsatz gebracht, welches in der Automobilindustrie verwendet wird, insbesondere ein Kühlmittel für Aluminiumbauteile, wie. z.B. ein Aluminiummotor.

Vorzugsweise werden der Verteiler und/oder der Sammler an das Hohlprofil bzw. an die Hohlprofile angeschweißt, angelötet, angeklebt oder anderweitig befestigt, beispielsweise durch Quetschverbindungen, und insbesondere zusätzlich verschraubt. Dadurch kann eine flüssigkeitsdichte Verbindung zwischen dem Verteiler bzw. Sammler und dem Hohlprofil bzw. den Hohlprofilen gewährleistet werden sowie ein stabilisierender Effekt an dem Eingangs- bzw. Ausgangsbereich der Hohlprofile hervorgerufen werden. Der Verteiler bzw. Sammler können als Kunststoffspritzgussteil, Aluminiumdruckgussteil oder Aluminiumfeingussteil kostengünstig und rationell hergestellt werden, und können dadurch auch zu einer weiteren Gewichtsreduktion des Kühlmoduls führen. Alternativ kann der Sammler und/oder der Verteiler ebenfalls als Strangpressteil hergestellt werden.

In einer bevorzugten Ausführungsform wird das fertiggestellte Kühlmodul oder die Hohlprofile durch ein Eloxierverfahren und/oder Pulverbeschichtungsverfahren nachbehandelt. Das Kühlmodul kann auch z.B. mit einer Farbschicht versehen werden, um dieses vor Schmutz, z.B. Straßenschmutz, zu schützen und so die Lebensdauer eines Kühlmoduls zu verlängern. Die Schutzschicht kann darüber hinaus die Funktion einer elektrischen Isolation übernehmen.

Erfindungsgemäß wird auch ein Kühlmodul bereitgestellt, wobei das Kühlmodul die Form eines Körpers mit einem inneren Raum zur Aufnahme von Batteriezellen aufweist, wobei der Körper zwischen einem Einlassbereich und einem Auslassbereich eine oder mehrere parallel zueinander erstreckenden Kühlpassagen aufweist und mindestens teilweise aus einer Länge oder aus mehreren Längen eines Hohlprofils gebildet ist.

Bei einem Kühlmodul, welches mindestens einen Kühlflügel aufweist, ist der Raum, der zwischen den Kühlflügeln und den Batteriezellen gebildet ist, mit einem Einleger gefüllt, welcher eine der folgenden Funktionen aufweist: eine wärmeleitende Funktion, eine brandhemmende Funktion und eine mechanisch stützende Funktion. Dieser Einleger kann mit der Batteriezelle und/oder dem Hohlprofil durch Einlegen, Einkleben, Einschweißen, Einlöten oder mittels eines weiteren Verfahrens verbunden werden.

Vorzugsweise wird das gebogene Hohlprofil durch ein Stützprofil, z.B. ein faserverstärktes Kunststoffrohr, an den vorderen Enden des Kühlmoduls stabilisiert.

In einem Ausführungsbeispiel des Kühlmoduls ist die Batteriezelle in den Auflagebereichen am Hohlprofil gegenüber dem Hohlprofil elektrisch isoliert, z.B. durch eine selbstklebende Folie oder Beschichtung.

Insbesondere sind die Batteriezellen in Bereichen, z.B. den Aussparungen des Kühlflügels, in den Ecken am Hohlprofil oder zum Sammler und/ oder Verteiler durch Einlegen von elektrisch isolierenden Streifen, z.B. aus Kunststoff, gegenüber dem Kühlmodul isoliert.

Die Vorteile, die im Zusammenhang mit den verschiedenen Ausführungsformen des erfindungsgemäßen Verfahren erläutert wurden, gelten sinngemäß für die Weiterbildung des erfindungsgemäßen Kühlmoduls.

Die Erfindung wird nachfolgend anhand von Ausführungsbeispielen unter Bezugnahme auf die Zeichnung näher erläutert, in welcher zeigen:
- Fig. 1: eine perspektivische Darstellung eines erfindungsgemäßen Kühlmoduls;
- Fig. 2A: ein Hohlprofil;
- Fig. 2B: ein U-förmig gebogenes Hohlprofil;
- Fig. 2C: einen Schnitt durch das Hohlprofil der Fig. 2A in der Ebene A-A der Fig. 2A;
- Fig. 3A, 3B: perspektivische Darstellungen von Hohlprofilen;
- Fig. 4: eine Explosionszeichnung eines U-förmig gebogenen Hohlprofils mit eingesetzter Kühlplatte;
- Fig. 5: eine perspektivische Darstellung des Zusammenbaus eines erfindungsgemäßen Kühlmoduls mit zugehörigen Batteriezellen;
- Fig. 6: eine Explosionszeichnung eines U-förmig gebogenen Hohlprofils mit Kühlflügeln;
- Fig. 7A bis 7E: Schnitte von Hohlprofilen ähnlich des Schnittes der Fig. 2C in schematischer Form;
- Fig. 8A, 8B: perspektivische Darstellungen von erfindungsgemäßen Kühlmodulen;
- Fig. 9A,: 9B Ansichten von oben von Hohlprofilen;
- Fig. 10A, 10B: Ansichten von verbundene Hohlprofilen;
- Fig. 11: eine Explosionszeichnung eines weiteren U-förmig gebogenen Hohlprofils mit einzusetztendem Einleger und Batteriezellen;
- Fig. 12: ein Kühlmodul mit zwei eingelegten Batteriezellen;
- Fig. 13: ein Kühlmodul mit vier eingelegten Batteriezellen;
- Fig. 14: eine perspektivische Darstellung des Zusammenbaus eines weiteren erfindungsgemäßen Kühlmoduls mit zugehörigen Batteriezellen;
- Fig. 15A: eine Draufsicht auf einen Sammler;
- Fig. 15B: einen Schnitt durch den Sammler gemäß der Schnittlinie A:A der Fig. 15B; und
- Fi.g 16: eine perspektivische Darstellung eines weiteren erfindungsgemäßen Kühlmoduls.

Merkmale, die die gleiche oder eine ähnliche Funktion haben, werden nachfolgend mit den gleichen Bezugszeichen versehen, und es versteht sich von selbst, dass die Beschreibung, die für Bauteile oder Bauteilfunktionen im Zusammenhang mit einer Ausführungsform gegeben werden, auch für andere Ausführungsformen gelten, bei denen die gleichen Bezugszeichen verwendet werden, es sei denn, dass etwas Gegenteiliges erwähnt wird.

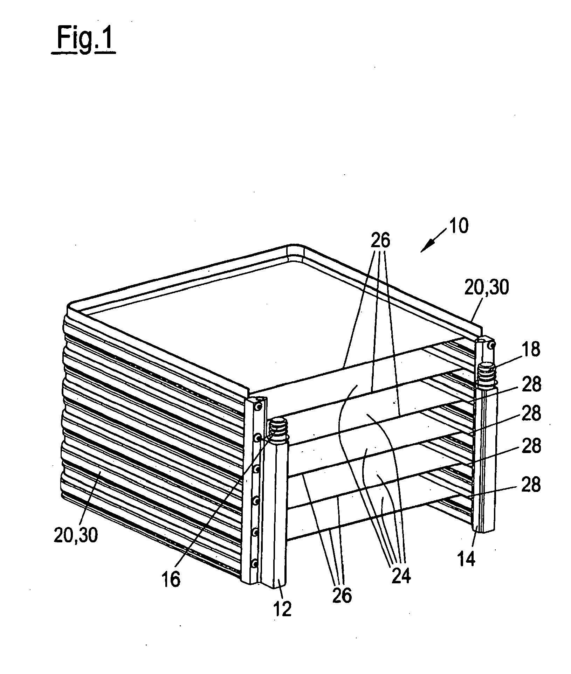

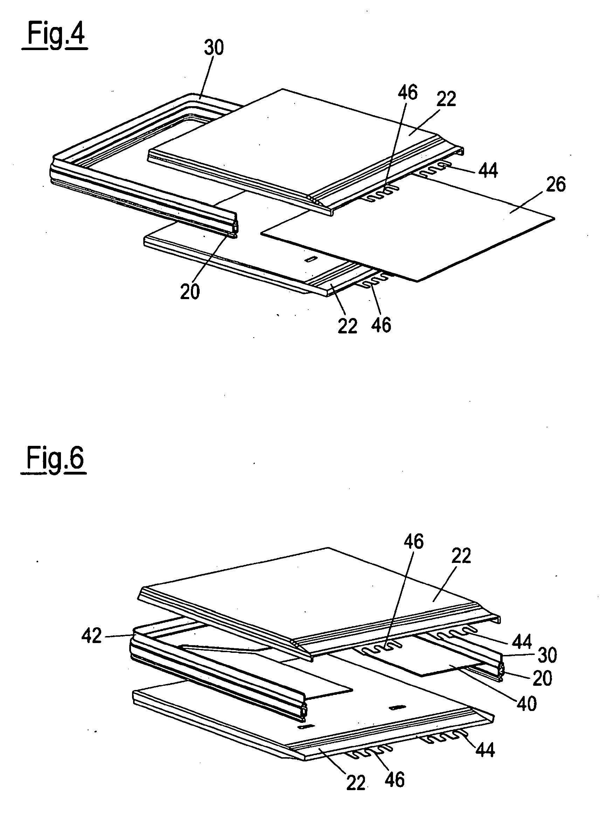

Die Fig. 1 zeigt eine perspektivische Darstellung eines erfindungsgemäßen Kühlmoduls 10. Das Kühlmodul 10 hat eine im Wesentlichen quaderförmige Form und weist in seinem Eingangsbereich einen Verteiler 12 und in seinem Ausgangsbereich einen Sammler 14 auf. Der Verteiler 12 und der Sammler 14 weisen jeweils einen Anschluss 16, 18 auf, durch den das Kühlmittel zu- bzw. abgeführt werden kann. Zwischen dem Verteiler 12 und dem Sammler 14 erstrecken sich sechs parallel zueinander verlaufende Kühlpassagen 20. Um die Kühlung der einzelnen Batteriezellen 22 (siehe Fig. 4), die in die Fächer 24 des Kühlmoduls 10 eingesetzt werden können, zu gewährleisten, erstrecken sich in dem vorliegenden Beispiel sechs Kühlplatten 26 im Wesentlichen parallel zu den einzelnen Kühlpassagen 20. Die Kühlplatten 26 werden in vorgefertigte Nuten 28 eines Hohlprofils 30 eingeführt. Die Kühlpassagen 20 werden in dem vorgefertigten Hohlprofil 30 gebildet.

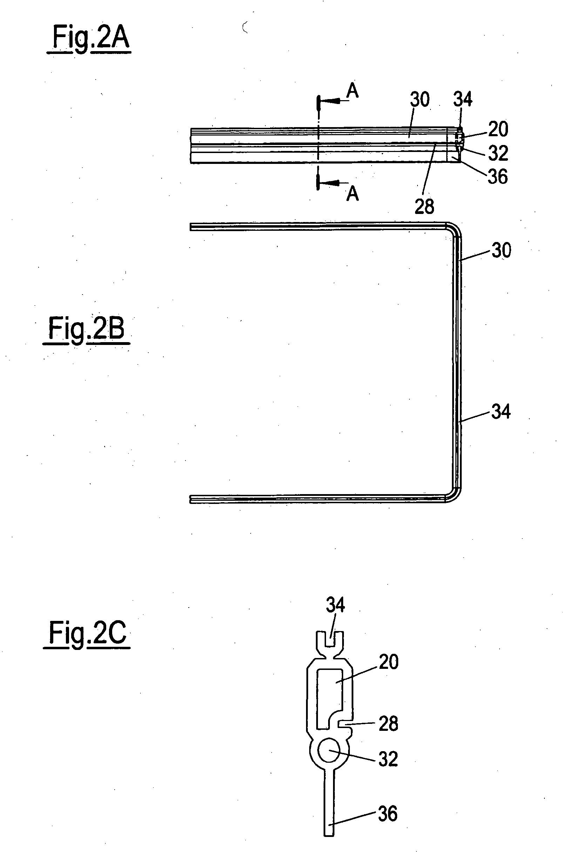

Die Fig. 2A zeigt eine Seitenansicht eines Hohlprofils 30, in dem sich die Nut 28 im Wesentlichen entlang der Mitte des Hohlprofils 30 parallel zu der Längsrichtung des Hohlprofils 30 erstreckt.

Die Fig. 2B zeigt eine Draufsicht auf das gebogene Hohlprofil 30 der Fig. 2A. Die Fig. 2C zeigt einen Schnitt entlang der Schnittlinie A-A des Hohlprofils 30 der Fig. 2A. Das Hohlprofil 30 der Fig. 2C weist eine Kühlpassage 20, ein Schraubenloch 32 sowie die Nut 28 auf, welche zwischen dem Schraubenloch 32 und der Kühlpassage 20 vorgesehen ist. An den oberen und unteren Enden der Längsrichtung des Hohlprofils 30 ist eine Nut und eine Feder 34, 36 zu sehen, welche dazu ausgebildet sind, mehrere Hohlprofile 30 an ihren Längsseiten miteinander zu verbinden. Dadurch, dass die Feder 36 des Hohlprofils 30 in die Nut 34 eines angrenzenden Hohlprofils 30 geführt wird, entsteht eine Nut- und Federverbindung.

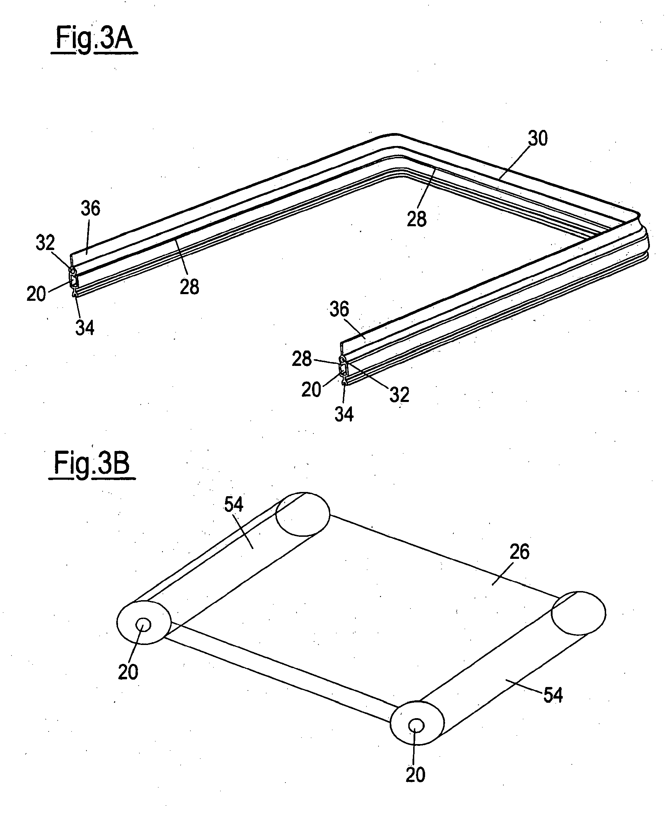

Die Fig. 3A zeigt eine perspektivische Darstellung des Hohlprofils 30 der Figuren 2A bis 2C. An den jeweiligen Enden 38 des Hohlprofils 30 sind die Kühlpassage 20, die Nut 28, die Nut und Feder 34, 36 sowie die Schraubenlöcher 32 zu erkennen.

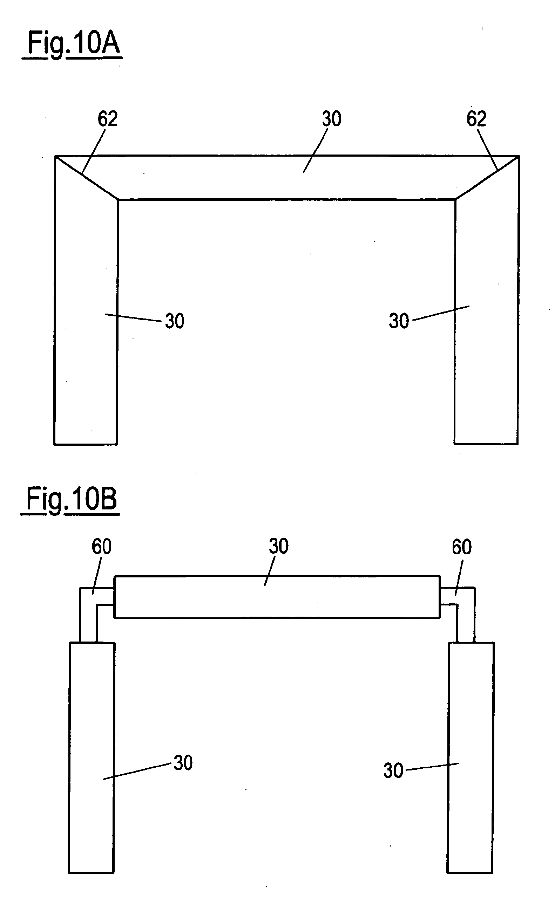

Die Fig. 3B zeigt eine perspektivische Darstellung eines Hohlprofils 30, welches zwei hohle Fluidkanäle 20 an seinen seitlichen Abschnitten 54 aufweist. Zwischen den seitlichen Abschnitten 54 erstreckt sich ein ebener Wandabschnitt 26. Hohlprofile 30, wie sie in der Fig. 3B gezeigt sind, können einfach aufeinander gestapelt werden und können so ein Kühlmodul 10 bilden, welches an mindestens zwei Seiten Kühlpassagen 20 aufweist. Diese können jeweils mit einem Verteiler 12 bzw. Sammler 14 fluidleitend verbunden werden. Alternativ hierzu könnte auch zumindest ein Ende einer Kühlpassage mittels eines Bogenabschnitts 60 (Fig. 10B) oder einer Verbindungsplatte, welche jeweils mindestens eine Kühlpassage 20 aufweist, mit einem Ende der zweiten Kühlpassage 20 fluidleitend verbunden werden, so dass auch ein solches Kühlmodul 10 eine Flüssigkeitskühlung an mindestens 3 Seiten aufweist.

Die Fig. 4 zeigt eine Explosionszeichnung eines Hohlprofils 30, welches U-förmig gebogen ist. Das U-förmig gebogene Hohlprofil 30 umfasst eine so genannte Kühlplatte 26, welche nach dem Umbiegen des Hohlprofils 30 in die Nut 28 eingesetzt werden kann.

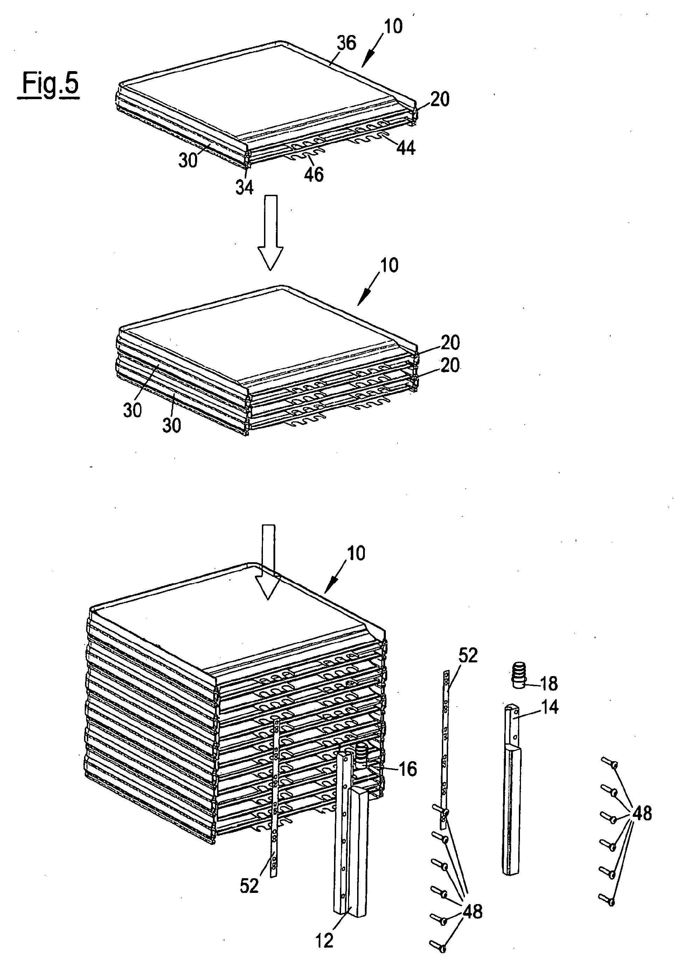

Desweiteren zeigt die Fig. 4 zwei Batteriezellen 22, welche jeweils positive und negative Anschlüsse 44, 46 aufweisen und z.B. Batteriezellen 22 für ein Batteriemodul 50 (siehe Fig. 5) einer Traktionsbatterie sein können. Die U-förmige Form des Hohlprofils 30 wird an die Form der Batteriezellen 22, die in dem Kühlmodul 10 vorgesehen werden sollen, angepasst. D.h. das Hohlprofil 30 wird so gebogen, dass die vollständige Länge der Batteriezelle 22 und die Breite der Batteriezelle 22 problemlos in die einzelnen Fächer 24 eines Kühlmoduls 10 geschoben werden können, es aber einem Monteur bzw. Arbeiter erlauben, die Kontakte 44, 46 der einzelnen Batteriezellen 22 miteinander zu verbinden, um ein Batteriemodul 50 mit der gewünschten Leistung bereitzustellen.

Nachdem ein Hohlprofil 30 U-förmig gebogen worden ist und die Batteriezellen 22 in ihre vorgesehenen Fächer 24 eingebracht worden sind, können, wie aus der Fig. 5 ersichtlich, mehrere dieser Hohlprofile 30 zusammengeführt werden und je nach Bedarf ein Kühlmodul 10 bzw. ein Batteriemodul 50 mit zwei bzw. vier bzw. sechs etc. solcher Batteriezellen 22 bereitgestellt werden. Nachdem die gewünschte Anzahl der Batteriezellen 22 in einem Kühlmodul 10 mit den U-förmigen Hohlprofilen zusammengeführt worden ist, wird an dem jeweiligen Einlass- bzw. Auslassbereich ein Dichtmaterial 52 angebracht, um zwischen dem Einlassbereich bzw. Auslassbereich der Hohlprofile 30 und dem Verteiler 12 bzw. dem Sammler 14 eine flüssigdichte Verbindung herzustellen. Der Verteiler 12 bzw. der Sammler 14 können zusätzlich mittels Schrauben 48 noch verschraubt werden, so dass keine oder so wenig Kühlmittel wie möglich an diesen Verbindungsstellen heraustreten bzw. dass nach Möglichkeit kein Kühlmittel an diesen Verbindungsstellen heraustreten kann.

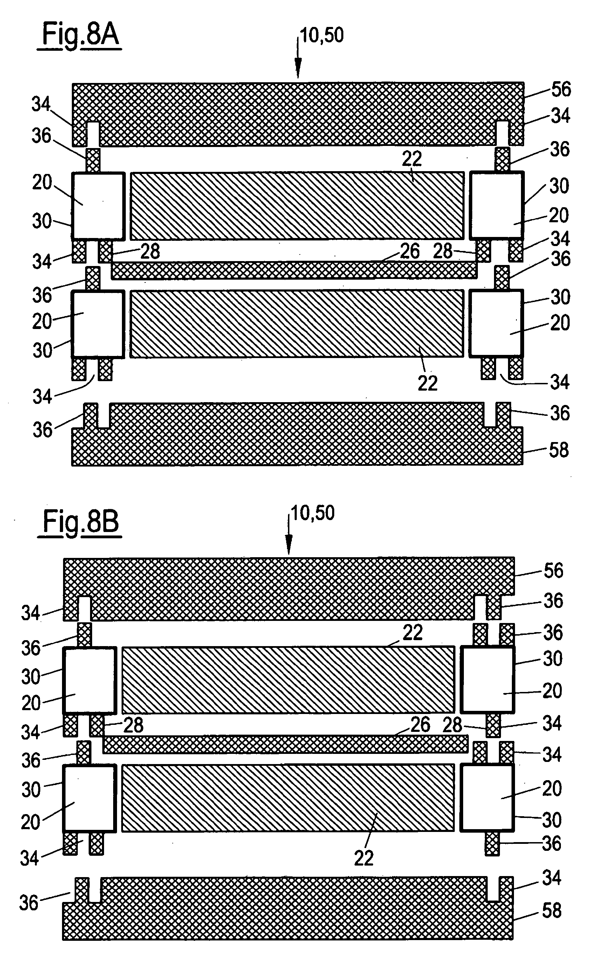

Wie auch aus Fig. 5 ersichtlich, werden am Verteiler 12 bzw. Sammler 14 jeweils Anschlussstutzen 16, 18 für Schläuche (nicht gezeigt) eingebracht. Diese können integraler Bestandteil des Verteilers oder Sammlers sein, wie in Fig. 5 dargestellt, oder verklebt bzw. verschraubt und/oder angeschweißt werden. Der Verteiler 12 und der Sammler 14 könnten über einen Steg bzw. ein Joch (nicht gezeigt) verbunden werden, um dem Kühlmodul 10 eine erhöhte Steifigkeit zu geben und um, als Anschlussmöglichkeit für eine obere bzw. untere Abschlussplatte 56, 58 (siehe Fig. 8A & B) zu dienen. Eine obere bzw. untere Abschlussplatte 56, 58 kann bzw. können in der Regel mittels der jeweiligen Nut und Feder 34, 36 am obersten bzw. untersten Hohlprofil 30 eines Kühlmoduls 10 angebracht werden, um die unterste bzw. oberste Batteriezelle 22 zu schützen.

Die Batteriezellen 22 können auch nach dem Fertigstellen des Kühlmoduls 10 in dessen Kühlfächer 24 eingesetzt werden. So wird vermieden, dass beim Verlöten bzw. Schweißen oder Kleben des Verteilers 12 oder des Sammlers 14 diese beschädigt werden.

Die Fig. 6 zeigt eine Explosionszeichnung eines alternativen Hohlprofils 30 welches U-förmig gebogen ist. Das U-förmig gebogene Hohlprofil 30 umfasst so genannte Kühlflügel 40, welche bei einem Stranggießverfahren als Teil des Hohlprofiles 30 hergestellt werden können oder vor dem Biegen des Hohlprofils 30 als eine Blechplatte 40 in die Nut 28 des Hohlprofils 30 eingebracht werden können und vor dem U-förmigen Biegen des Hohlprofils 30 an den Positionen 42, wo die Umformung geschehen soll, ausgeklinkt werden können.

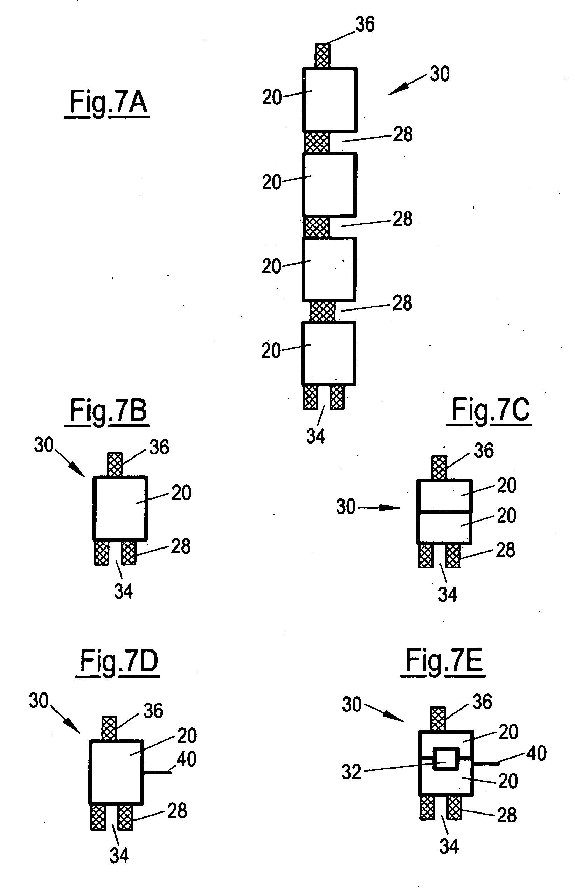

Die Fig. 7A zeigt ein Hohlprofil 30 im Schnitt ähnlich dem Schnitt der Fig. 2C. In diesem Beispiel weist das Hohlprofil 30 vier einzelne Kühlpassagen 20 auf, wobei zwischen den einzelnen Kühlpassagen 20 jeweils eine Nut 28 zum Vorsehen einer Kühlplatte 26 bzw. zum Anbringen von Kühlflügeln 40 vorgesehen ist. In dem Beispiel der Fig. 7 können zwischen zwei benachbarten Nuten 28 eine bzw. zwei Batteriezellen 22 je nach Bedarf eingeführt werden. Am unteren und oberen Ende der Fig. 7A ist jeweils eine Nut und Feder-Verbindung 34, 36 zu sehen.

Die Fig. 7B zeigt einen Schnitt ähnlich der Fig. 7A. In diesem Beispiel ist ein vereinfachtes Hohlprofil 30 zu sehen, welches eine Kühlpassage 20 aufweist. Am oberen und unteren Ende des Hohlprofils 30 ist eine Nut und eine Feder 34, 36 zu sehen, welche dazu benutzt werden können, das Hohlprofil 30 mit weiteren Hohlprofilen 30 zu verbinden. Die Nut und Feder 34, 36 von verbundenen Hohlprofilen 30 können dabei eine Nut- und Federverbindung bilden. Der Raum, der dabei zwischen verbundenen Hohlprofilen 30 gebildet wird, kann als eine Nut 28 zum Vorsehen von Kühlplatten 26 bzw. Kühlflügeln 40 verwendet werden. D.h. die Breite einer Nut 28 kann durch die Länge der Feder 36, die mit einer Nut 34 eines angrenzenden Hohlprofils 30 verbunden wird, bestimmt werden bzw. die Breite der Nut 28 kann der Tiefe der Nut 34, die mit einer Feder 36 eines angrenzenden Hohlprofils 30 verbunden wird, entsprechen.

Die Fig. 7C zeigt ein weiteres Hohlprofil 30, in dem zwei Kühlpassagen 20 zwischen der Nut- und Federverbindung 34, 36 zu sehen sind. Dadurch, dass zwei verschiedene Querschnitte von Kühlpassagen 20 in einem Hohlprofil 30 vorhanden sind, herrschen zwischen einzelnen Kühlpassagen 20 des Hohlprofils 30 verschiedene Strömungsgeschwindigkeiten des Kühlmittels. Die verschiedenen Strömungsgeschwindigkeiten können für eine gezieltere Wärmeableitung von den Batteriezellen 22 benützt werden.

Die Fig. 7D zeigt ein weiteres Hohlprofil 30, in dem ein Kühlflügel 40 vorgesehen ist, welcher bei einem Stranggießverfahren des Hohlprofils 30 direkt vorgesehen werden kann. Die Hohlprofile 30 der Fig. 7A-7D werden nach dem U-förmigen Umbiegen und Zusammenstecken in das gewünschte Batteriemodul 50 mit dem jeweiligen Sammler 14 bzw. Verteiler 12 verklebt bzw. verlötet, um eine flüssigkeitsdichte Verbindung dazwischen herzustellen.

Die Fig. 7E zeigt ein weiteres Hohlprofil 30, in dem zwei Kühlpassagen 20 mit unterschiedlichen Querschnitten vorgesehen sind. Zwischen den zwei Kühlpassagen 20 ist ein Schraubenloch 32 vorgesehen. Auch ein Kühlflügel 40 ist in dem Hohlprofil 30 der Fig. 7E vorgesehen.

In diesem Zusammenhang ist anzumerken, dass ein Hohlprofil 30, welches in der vorliegenden Erfindung zum Einsatz gelangen kann, mindestens eine Kühlpassage aufweisen muss. Ob nun eine Nut 28 bzw. ein Kühlflügel 40 oder ein Schraubenloch 32 oder weitere Kühlpassagen vorgesehen werden, hängt von dem jeweiligen Einsatzgebiet ab, für welches das Kühlmodul 10 vorgesehen wird. Desweiteren kann die Kühlpassage 20 einen Querschnitt aufweisen, welcher z.B. rund, oval, eckig oder eine andere beliebige geometrische Form haben kann, solange diese Form einen Wärmeübertrag von den Batteriezellen 22 zu dem Kühlmittel, welches in der Kühlpassage geführt wird, gewährleistet.

Anstelle eines gebogenen Hohlprofils 30 könnte auch ein Hohlprofil 30 aus mehreren symmetrischen Hohlprofilen 30 zusammengesetzt sein, welche durch Schweißen, Löten bzw. Kleben verbunden werden, und entsprechende Schweißnähte bzw. Löt- oder Klebestellen 62 aufweisen (siehe Fig. 10A) oder auch durch ein gewinkeltes Röhrchen 60 (siehe Fig. 10B), welches in die Kühlpassagen 30 gelötet bzw. geschweißt oder verklebt wird, verbunden werden. In diesem Zusammenhang wäre es auch möglich, ein Kühlmodul 10 bereitzustellen, welches aus zwei Reihen von Hohlprofilen 30 besteht, die jeweils über einen separaten Verteiler 12 bzw. Sammler 14 verfügen. Die jeweiligen Verteiler 12 bzw. Sammler 14 eines solchen Kühlmoduls 10 könnten jeweils über einen Steg bzw. ein Joch verbunden werden (nicht gezeigt), um dem Kühlmodul 10 eine erhöhte Steifigkeit zu verleihen.

Die Figuren 8A und 8B zeigen jeweils eine schematische Explosionszeichnung von erfindungsgemäßen Kühlmodulen 10. An deren oberen und unteren Enden ist jeweils eine obere bzw. eine untere Abschlussplatte 56, 58 an den Hohlprofilen 30 angeordnet. Solche Abschlussplatten 56, 58 können bei jedem Kühlmodul 10 vorgesehen werden. In dem Beispiel der Fig. 8A wird ein Kühlmodul 10 gezeigt, welches aus zwei U-förmig gebogenen Hohlprofilen 30 gebildet ist. Die untere Platte 58, weist eine umlaufende Feder 36 auf, und die obere Platte 56 weist eine umgehende Nut 34 auf.

Im Gegensatz hierzu zeigt die Fig. 8B ein Kühlmodul 10, welches zwei Reihen von Hohlprofilen 30 aufweist, bei denen die Nut und Feder 34, 36 der einzelnen Reihen in ihrer Position vertauscht sind, so dass eine linke Reihe von Hohlprofilen 30 an ihrem obersten Ende eine Nut 34 aufweist und eine rechte Reihe von Hohlprofilen 30 an ihrem obersten Ende eine Feder 36 aufweist, so dass dieselbe Abschlussplatte 56, 58 an dem unteren bzw. oberen Ende der zwei Reihen von Hohlprofilen ein Kühlmodul 10 komplettieren könnte. Solch eine Abschlussplatte 56, 58 weist an einem Ende einer Seite eine Nut 34 und an dem anderen Ende dieser Seite eine Feder 36 auf.

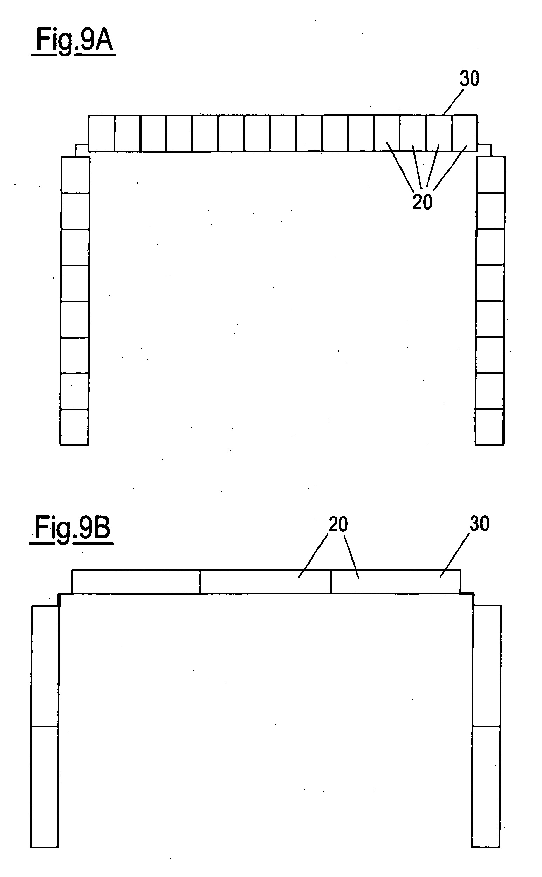

Die Fig. 9A bzw. 9B zeigen jeweils einen Schnitt eines Hohlprofils 30, welches in einem Stranggießverfahren direkt mit drei Seiten hergestellt wird, um ein dreiseitiges Kühlmodul 10 zu bilden. Während in den bisherigen Beispielen die Kühlpassagen 20 so beschrieben und ausgeführt worden sind, dass sich die Kühlpassagen 20 im Wesentlichen parallel zu der Breite und der Länge der einzelnen Batteriezellen 22 erstrecken, zeigen die Figuren 9A und 9B Ausführungsformen, in denen dies nicht zwingend der Fall sein muss.

Ein solches Kühlmodul 10 kann dann Kühlpassagen 20 aufweisen, die sich senkrecht zu der Breite und der Länge der Batteriezellen 22 erstrecken. In diesem Fall wird dann der jeweilige Verteiler 12 bzw. Sammler 14 oben bzw. unten an die quaderförmige Form des Kühlmoduls 10 angeschlossen.

Alternativ hierzu können die Hohlprofile der Fig. 9A und 9B auch mit Verbindungsblechen 24, 40 versehen werden, die sich parallel zu den zwei äußeren Reihen von Kühlpassagen 20 erstrecken, um ein Kühlmodul 10 zu bilden, welches in seiner Höhe begrenzt ist, aber in seiner Breite verändert werden kann und Kühlfächer 24 aufweist. In diesem Falle werden der Verteiler 12 bzw. der Sammler 14 jeweils an den Seiten des Kühlmoduls 10 angebracht.

Um ein Kühlmodul 10 herzustellen, werden in einem ersten Schritt ein oder mehrere Hohlprofile 30 auf die gewünschte Länge geschnitten. D.h. je nach Größe der Batteriezelle 22, die in ein Kühlmodul 10 eingesetzt werden kann, wird ein Hohlprofil 30 so geschnitten, dass drei Seiten einer rechtwinkligen Batteriezelle 22 von dem Hohlprofil 30 nach dessen Umformen umgeben werden. Die Hohlprofile 30 sind dazu ausgebildet, um an ihren Längsseiten entweder mit weiteren Hohlprofilen 30 bzw. mit Abdeckplatten 56, 58, die von oben bzw. von unten auf die fertige Quaderform des Kühlmoduls 10 gesteckt werden können, verbunden zu werden. In einem zweiten Schritt werden das oder die Hohlprofile 30, wenn mehrere Hohlprofile 30 miteinander verbunden worden sind, in die gewünschte U-Form gebogen. Es können aber auch erst alle einzelnen Hohlprofile 30 in die gewünschte U-Form gebogen werden, bevor diese an ihren Längsseiten miteinander verbunden werden. Die Hohlprofile 30 können durch Kleben, Löten, Schweißen, Verpressen, Verschrauben, Verklemmen oder Umspannen bzw. mittels einer Nut- und Federverbindung 34, 36 miteinander verbunden werden.

Nach dem Umformen der Hohlprofile 30 können an mindestens zwei gegenüberliegenden Seiten und vorzugsweise drei gegenüberliegenden Seiten des Kühlmoduls 10 Kühlplatten 26 in die Nuten 28 des Hohlprofils 30 eingebracht werden und zwischen sich Fächer 24 ausbilden, die zur Aufnahme der Batteriezellen 22 bemessen sind. Für den Fall, dass die Hohlprofile 30 mit einem Kühlflügel 40 ausgebildet wurden, werden diese Kühlflügel 40 vor dem Umformen an den Positionen 42, wo gebogen werden soll, ausgestanzt bzw. ausgeschnitten, damit an den Positionen 42 eine Verformung des Materials der einzelnen Kühlflügel 40 vermieden wird, und so ein quaderförmiges Kühlfach 24 gewährleistet wird. Nachdem die gewünschte Höhe des Kühlmoduls 10 erreicht wurde und die Batteriezellen 22 in die Fächer 24 eines Kühlmoduls 10 eingeführt wurden, wird am Einlassbereich bzw. am Auslassbereich ein Verteiler 12 bzw. ein Sammler 14 vorgesehen. Alternativ hierzu können der Verteiler bzw. der Sammler vor dem Einsetzen der Batteriezellen in die Fächer 24 mit dem oder den Hohlprofilen 30 verbunden werden. Diese werden in etwa senkrecht zu den einzelnen Kühlpassagen 20 angebracht. Im Betrieb wird das Kühlmittel über einen Anschluss 16 in den Verteiler 12 geführt und durch diesen in die einzelnen Kühlpassagen 20 verteilt und anschließend im Sammler 14 gesammelt und zu einem Auslass 18 geleitet. Der Sammler 14 bzw. der Verteiler 12 können an das Hohlprofil 30 bzw. an die Hohlprofile 30 angeschweißt, angelötet, angeklebt oder anderweitig befestigt werden, beispielsweise durch Quetschverbindungen, und werden, besonders bevorzugt, zusätzlich mittels Schrauben 48 verschraubt. Nachdem ein Kühlmodul 10 hergestellt wurde, kann dieses nachbehandelt werden, z.B. in einem Eloxierverfahren und/oder in einem Pulverbeschichtungsverfahren, oder das Kühlmodul 10 kann auch einfach mit einer Farbschicht versehen werden.

Die Hohlprofile 30 der vorliegenden Erfindung können in einem Stranggießverfahren hergestellt werden. Als Material für die Hohlprofile 30 werden bevorzugt Metalle mit einer hohen Wärmeleitfähigkeit eingesetzt, wie z.B. Aluminium (200 W/mK), Kohlenstoffstahl, Magnesium, Nickel, etc.

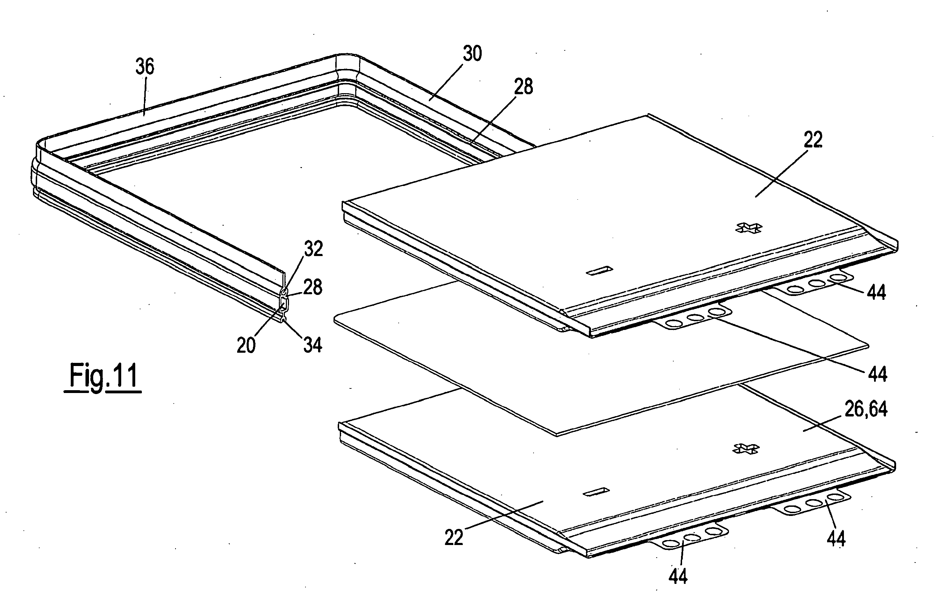

Geometrische Ausdrücke, wie z.B. oben oder unten, werden stets in Bezug auf eine hier gezeigte Ausführungsform und deren Anordnung in der jeweiligen Figur verwendet. Es versteht sich von selbst, dass die Ausführungsformen in ihrer geometrischen Lage verändert werden können. Fig. 11 zeigt eine Explosionszeichnung eines weiteren U-förmig gebogenen Hohlprofils 30 mit einzusetztedem Einleger 64 und in zwei Batteriezellen 22. Die Anschlüße 44 an den Batteriezellen 22 sind in diesem Beispiel mit Durchgangslöchern versehen, durch die eine Kontaktierung mit weiteren Batteriezellen 22 ermöglicht wird. Der Einleger 64 füllt den Raum zwischen zwei benachbarten Batteriezellen 22. Insbesonder erfüllt der Einleger 64 eine der folgenden Funktionen; eine wärmeleitende Funktion, z.B. wenn der Einleger 64 als Kühlplatte 26 ausgebildet ist, eine brandhemmende Funktion und eine mechanisch stützende Funktion. Typischerwise wird der Einleger entweder eingelegt, eingeklebt, eingeschweißt, eingelötet oder mittels eines weiteren Verfahrens mit der Batteriezelle 22 und/oder einem Hohlprofil 30 verbunden.

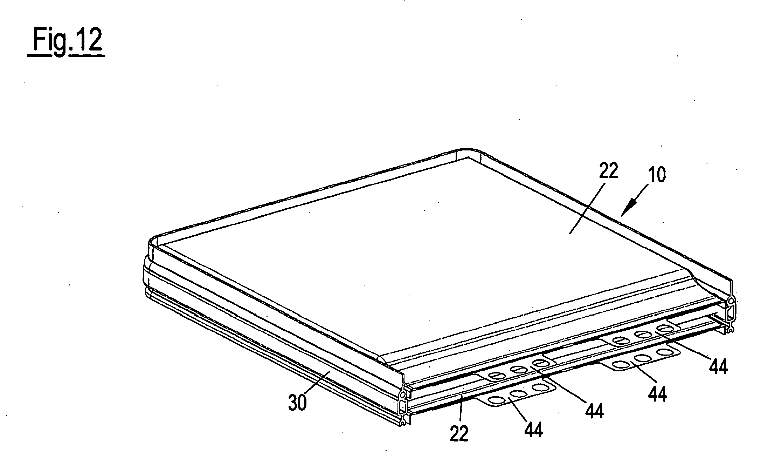

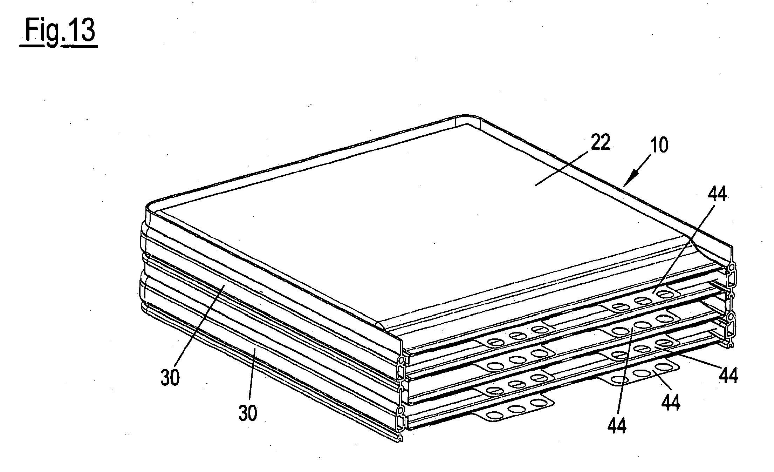

Die Fig. 12 und die Fig. 13 zeigen jeweils ein Kühlmodul 10, wobei entweder zwei Batteriezellen 22 oder vier Batteriezellen 22 in jedem durch ein Hohlprofil gebidetes Fach vorgesehen sind, und die Batteriezellen 22 mit Anschlüssen 44, welche durch Durchgangslöcher gebildet sind, ausgestattet sind.

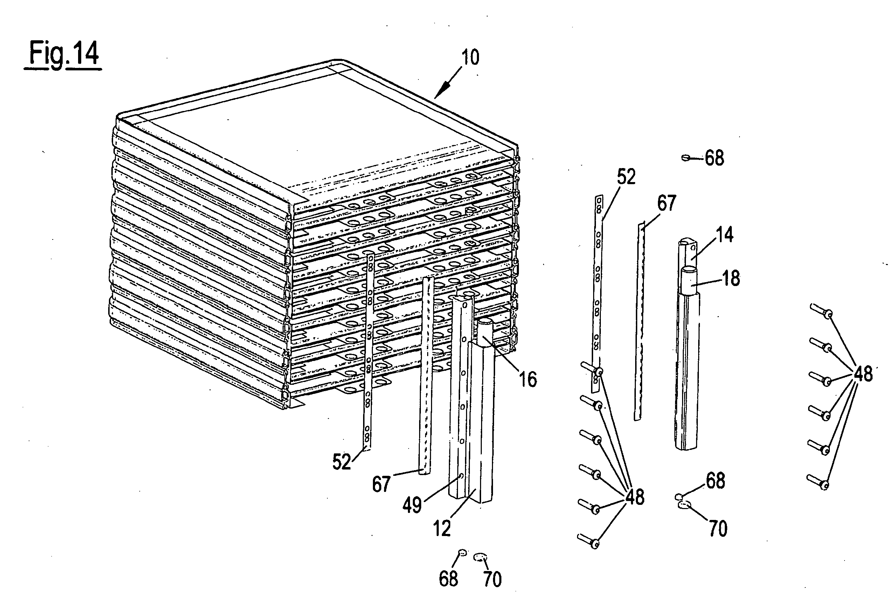

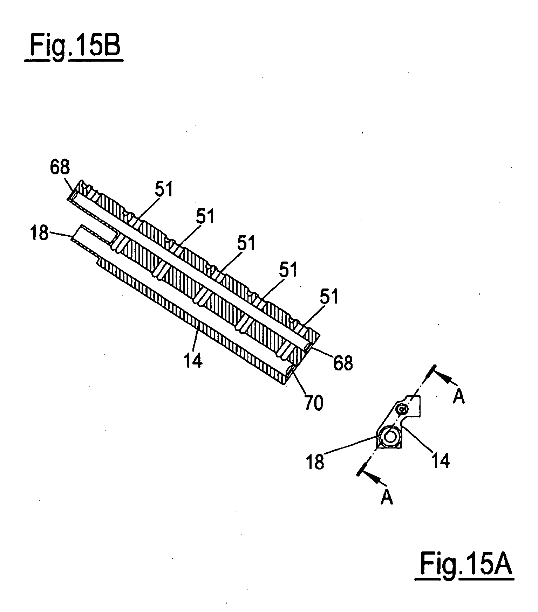

Fig. 14 zeigt eine perspektivische Darstellung des Zusammenbaus eines weiteren erfindungsgemäßen Kühlmoduls 10 mit zugehörigen Batteriezellen 22, während die Fig. 15A eine Draufsicht auf einen Sammler 14 gemäß Fig. 14 zeigt. Die Fig. 15B zeigt einen Schnitt durch den Sammler 14 gemäß der Schnittlinie A:A der Fig. 15B. Klar zu sehen ist der zylinderförmige Anschluss 18 für ein Kühlmittel.

In diesem Beispiel besteht der Sammler 14 bzw. Verteiler 12 aus einem stranggepressten Material, insbesondere aus Aluminium oder einer Aluminiumlegierung. Um den Sammler 14 bzw. Verteiler 12 nach dem Strangpressschritt herzustellen, wird z.B. mit einem Fingerfräser (nicht gezeigt) der zylinderförmige Anschluß 16 bzw. 18 gefräßt. Jede beliebige Form von Anschluss 16 bzw. 18 kann im Prinzip mittels eines geeigneten Schneidwerkzeuges am Sammler 14 bzw. Verteiler 12 hergestellt werden. Des Weiteren zeigt die Fig. 14 zwei verschiedene Arten von Verschlussstopfen 68, 70, die benötigt werden, um die Hohlräume des Sammlers 14 bzw. Verteilers 12 abzudichten.

Im zusammengebauten Zustand gehen die Schrauben 48 durch die Löcher 49 im Verteiler 12 und durch die entsprechende Löcher in der Dichtung 52 hindurch und greifen in die zylindrischen Passagen 32 in den Hohlprofilen ein. Es können Gewinde schneidende Schrauben 48 sein, die den Verteiler 12 und die Dichtung 52 gegen die Stirnseite des Kühlmoduls bzw. der Hohlprofile 30 klemmen. Zu den Löchern 49 axial und winkelmäßig versetzt sind Bohrungen 51 vorgesehen, die in den Fig. 15A und B zu sehen sind, die an ihren den Hohlprofilen 30 zugewandten Enden mit den Kühlpassagen der Hohlprofile und den entsprechenden Öffnungen in der Dichtung 52 fluchten und an ihren anderen Enden in die Einlaufpassage des Verteilers 12 münden, d.h. in die Passage mit dem größeren Durchmesser, die vom Anschluss gespeist wird. Dabei durchqueren die Bohrungen 51 die engere Verteilerpassage (d.h. die engere Längspassage des Verteilers, die die eigentliche Verteilung in die Hohlprofile 30 bewerkstelligt). Die Anordnung ist bei dem Sammler 14 die gleiche, nur spiegelsymmetrisch angebracht. Das Strangpressprof für den Verteller 12 und den Sammler 14 ist aber identisch, und dies gilt auch für die Dichtungen 52. Hierdurch kann eine äußerst rationelle Herstellung erreicht werden.

Das Bezugszeichen 67 stellt ein Kantenschutzprodil dar, das ebenfalls als Extrusion hergestellt werden kann.

Die Verschlussstopfen 68, 70 sind in dieser Schnittzeichnung am unteren Ende des Sammlers 14 zu sehen und dichten diesen nach unten hin ab. Ein weiterer Verschlusstopfen 68 ist am oberen Ende des Sammlers 14 zu sehen, der diese Kühlmittelpassage nach oben hin abdichtet.

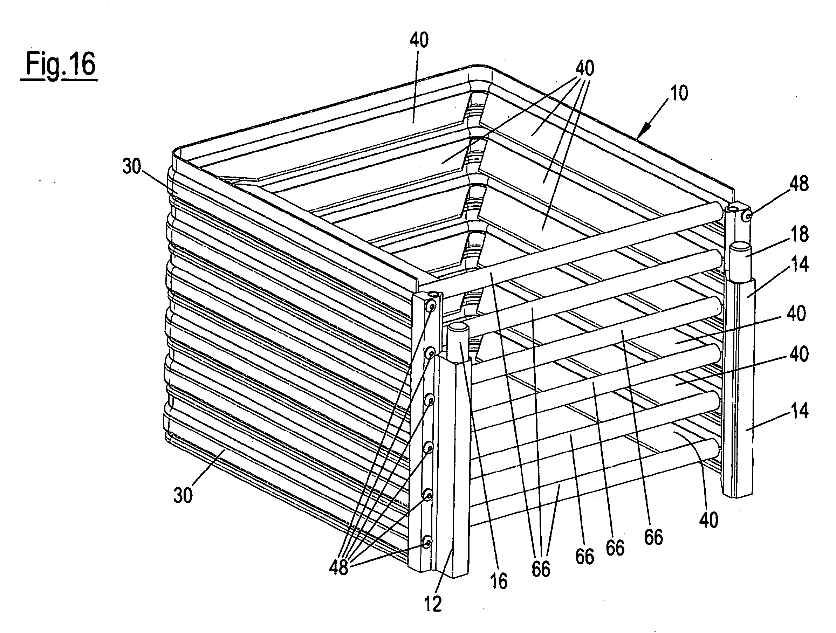

Die Fig. 16 zeigt eine perspektivische Darstellung eines weiteren erfindungsgemäßen Kühlmoduls 10. In diesem Kühlmodul 10 sind mehrere Stützprofile 66 vorgesehen, die das Kühlmodul 10 an seinen vorderen Enden stabilisiert. Das Stützprofil kann z.B. aus einem faserverstärkten Kunststoffrohr 60 bestehen.

### Bezugszeichenliste:

- 10: Kühlmodul
- 12: Verteiler
- 14: Sammler
- 16: Anschluss
- 18: Anschluss
- 20: Kühlpassage
- 22: Batteriezelle
- 24: Fach
- 26: Kühlplatte
- 28: Nut
- 30: Hohlprofil
- 32: Schraubenloch
- 34: Nut
- 36: Feder
- 38: Ende
- 40: Kühlflügel
- 42: Positionen
- 44: Anschluss
- 46: Anschluss
- 48: Schraube
- 49: Löcher
- 50: Batteriemodul
- 51: Bohrungen
- 52: Dichtung
- 54: Abschnitt
- 56: Abschlussplatte
- 58: Abschlussplatte
- 60: gebogenes Rohr
- 62: Schweißnaht bzw. Löt- oder Klebestelle
- 64: Einleger
- 66: Stützprofil
- 67: Kantenschutz
- 68: Verschlußstopfen
- 70: Verschlußstopfen

## Patentansprüche

1. Verfahren zum Herstellen eines Batteriezellen-Kühlmoduls (10) in der Form eines Körpers mit einem inneren Raum (24) zur Aufnahme von Batteriezellen (22), wobei der Körper zwischen einem Einlassbereich und einem Auslassbereich eine oder mehrere parallel zueinander erstreckende Kühlpassagen (20) aufweist und mindestens teilweise aus einer Länge oder aus mehreren Längen eines Hohlprofils (30) gebildet wird, wobei mindestens zwei Hohlprofile (30) verwendet werden, welche dazu ausgebildet sind, um an Ihren Längsseiten miteinander verbunden zu werden, wobei der Körper des Kühlmoduls (10) quaderförmig ist und eine Flüssigkeitskühlung an mindestens drei aufeinander folgenden Seiten aufweist, wobei die oder jede Hohlprofillänge (30) an mindestens zwei Stellen (42) in eine U-Form umgebogen wird, oder wobei Hohlprofile (30) an Ihren aneinander stoßenden Enden untereinander fluidleitend verklebt, verlötet oder verschweißt werden, oder wobei aufeinander folgende Hohlprofile (30) mittels Bogenelementen fluidleitend aneinander geschlossen werden, um mindestens zwei Ecken auszubilden,
**dadurch gekennzeichnet dass**
- entweder das Kühlmodul (10) anschließend mit Verbindungsblechen (26) versehen wird, die mindestens an zwei gegenüberliegenden Seiten des Kühlmoduls (10) an die Hohlprofile angebracht und vorzugsweise an drei Seiten des Kühlmoduls (10) wärmeleitend an die Hohlprofile angebracht angebracht werden und zwischen sich Fächer (24) ausbilden, die zur Aufnahme von Batteriezellen (22) bemessen sind, und wobei die Verbindungsbleche (26) in parallelen Ebenen liegen, und die Kühlpassagen (20) vorzugsweise parallel zu den parallelen Ebenen verlaufen,
- oder die Hohlprofillänge (30) mindestens einen Kühlflügel (40) aufweist, wobei der Kühlflügel (40) an Stellen (42) ausgeklinkt wird, an denen die Hohlprofillänge (30) umgebogen wird.

2. Verfahren nach Anspruch 1, wobei die Hohlprofile (30) durch Kleben und/oder durch Löten und/oder durch Schweißen und/oder Verpressen und/oder Verschrauben/Verklemmen und/oder Umspannen und/oder mittels Durchsetzfügen und/oder mittels einer Nut- und Federverbindung (34, 36) miteinander verbunden werden.

3. Verfahren nach Anspruch 1, wobei bei Verwendung von mehreren Hohlprofillängen (30) diese vor oder nach deren Verbindung umgebogen werden.

4. Verfahren nach zumindest einem der vorstehenden Ansprüche, wobei die Verbindungsbleche (26) in sich in Längsrichtung der Hohlprofillänge (30) erstreckende Führungsnuten (28) eingesetzt werden, und/oder die Verbindungsbleche durch Löten, Schweißen, Kleben, Reibkräfte oder anderweitig in den Führungsnuten (28) befestigt werden.

5. Verfahren nach zumindest einem der vorstehenden Ansprüche, wobei im Einlassbereich ein Verteiler (12) vorgesehen wird, der senkrecht zu den einzelnen Kühlpassagen (20) steht und im Betrieb ein Kühlmittel in die einzelnen Kühlpassagen (20) verteilt, und/oder im Auslassbereich ein Sammler (14) vorgesehen wird, der senkrecht zu den Kühlpassagen (20) steht und im Betrieb das Kühlmittel von den einzelnen Kühlpassagen (20) aufnimmt und zu einem Auslass (18) leitet, und/oder wobei der Verteiler (12) und/oder der Sammler (14) an das Hohlprofil (30) bzw. an die Hohlprofile (30) angeschweißt, angelötet, angeklebt oder anderweitig, beispielsweise durch Quetschverbindungen, befestigt wird und insbesondere zusätzlich verschraubt werden kann.

6. Verfahren nach zumindest einem der vorstehenden Ansprüche, wobei das Hohlprofil (30) durch ein Eloxierverfahren und/oder Pulverbeschichtungsverfahren oder ein anderes Beschichtungsverfahren nachbehandelt wird und dadurch elektrisch isoliert und geschützt wird.

7. Batteriezellen-Kühlmodul (10) in der Form eines Körpers mit einem inneren Raum (24) zur Aufnahme von Batteriezellen (22), wobei der Körper zwischen einem Einlassbereich und einem Auslassbereich eine oder mehrere parallel zueinander erstreckende Kühlpassagen (20) aufweist und mindestens teilweise aus einer Länge oder aus mehreren Längen eines Hohlprofils (30) gebildet ist, wobei mindestens zwei Hohlprofile (30) vorgesehen sind, welche an Ihren Längsseiten miteinander verbunden sind,
wobei der Körper des Kühlmoduls (10) quaderförmig ist und eine Flüssigkeitskühlung an mindestens drei aufeinander folgenden Seiten aufweist, wobei die oder jede Hohlprofillänge (30) an mindestens zwei Stellen (42) in eine U-Form umgebogen ist, oder wobei Hohlprofile (30) an ihren aneinander stoßenden Enden untereinander fluidleitend verklebt, verlötet oder verschweißt sind, oder wobei aufeinander folgende Hohlprofile (30) mittels Bogenelementen fluidleitend aneinander geschlossen sind, um mindestens zwei Ecken auszubilden, **dadurch gekennzeichnet, dass**
- entweder das Kühlmodul (10) mit Verbindungsblechen (26) versehen ist, die mindestens an zwei gegenüberliegenden Seiten des Kühlmoduls (10) an die Hohlprofile angebracht und vorzugsweise an drei Seiten des Kühlmoduls (10) wärmeleitend an die Hohlprofile angebracht angebracht sind und zwischen sich Fächer (24) bilden, die zur Aufnahme von Batteriezellen (24) bemessen sind, und wobei die Verbindungsbleche (26) in parallelen Ebenen liegen, und die Kühlpassagen (20) vorzugsweise parallel zu den parallelen Ebenen verlaufen,
- oder die Hohlprofillänge (30) mindestens einen Kühlflügel (40) aufweist, wobei der Kühlflügel (40) an Stellen (42) ausgeklinkt ist, an denen die Hohlprofillänge (30) umgebogen ist.

8. Batteriezellen-Kühlmodul (10) nach Anspruch 7, wobei die Hohlprofile (30) durch Kleben und/oder durch Löten und/oder durch Schweißen und/oder Verpressen und/oder Verschrauben/Verklemmen und/oder Umspannen und/oder mittels Durchsetzfügen und/oder mittels einer Nut- und Federverbindung (34, 36) miteinander verbunden sind.

9. Batteriezellen-Kühlmodul (10) nach zumindest einem der vorstehenden Ansprüche 7 oder 8, wobei die Verbindungsbleche (26) in sich in Längsrichtung der Hohlprofillänge (30) erstreckende Führungsnuten (28) eingesetzt sind, und/oder die Verbindungsbleche (26) durch Löten, Schweißen, Kleben, Reibkräfte oder anderweitig in den Führungsnuten (28) befestigt sind.

10. Batteriezellen-Kühlmodul (10) nach zumindest einem der vorstehenden Ansprüche 7 bis 9, wobei im Einlassbereich ein Verteiler (12) vorgesehen ist, der senkrecht zu den einzelnen Kühlpassagen (20) steht und im Betrieb ein Kühlmittel in die einzelnen Kühlpassagen (20) verteilt, und/oder im Auslassbereich ein Sammler (14) vorgesehen ist, der senkrecht zu den Kühlpassagen (20) steht und im Betrieb das Kühlmittel von den einzelnen Kühlpassagen (20) aufnimmt und zu einem Auslass (18) leitet, und/oder wobei der Verteiler (12) und/oder der Sammler (14) an das Hohlprofil (30) bzw. an die Hohlprofile (30) angeschweißt, angelötet, angeklebt oder anderweitig befestigt sind, beispielsweise durch Quetschverbindungen, und insbesondere zusätzlich verschraubt wird.

11. Batteriezellen-Kühlmodul (10) nach zumindest einem der vorstehenden Ansprüche 7 bis 10, wobei das Kühlmodul eloxiert und/oder pulverbeschichtet ist.

12. Batteriezellen-Kühlmodul nach Anspruch 7 oder einem davon abhängigen Anspruch, mit mindestens einem Kühlflügel (40), wobei der zwischen den Kühlflügeln und den Batteriezellen (22) gebildete Raum mit einem Einleger (64) gefüllt ist, welcher eine der folgenden Funktionen aufweist; eine wärmeleitende Funktion, eine brandhemmende Funktion und eine mechanisch stützende Funktion, wobei der Einleger eingelegt, eingeklebt, eingeschweißt, eingelötet oder mittels eines weiteren Verfahrens mit der Batteriezelle (22) und/oder dem Hohlprofil (30) verbunden sein kann.

13. Batteriezellen-Kühlmodul nach zumindest einem der vorstehenden Ansprüche 7 bis 11, wobei das gebogene Hohlprofil (30) durch ein Stützprofil (66), z.B. ein faserverstärktes Kunststoffrohr (60), an den vorderen Enden des Kühlmoduls (10) stabilisiert ist.

14. Batteriezellen-Kühlmodul nach zumindest einem der vorstehenden Ansprüche 7 bis 13, wobei die Batteriezelle (22) in den Auflagebereichen am Hohlprofil (30) gegenüber dem Höhlprofil (30) elektrisch isoliert ist, z.B. durch eine selbstklebende Folie oder Beschichtung.

15. Batteriezellen-Kühlmodul nach zumindest einem der vorstehenden Ansprüche 7 bis 14, wobei die Batteriezellen (22) in Bereichen, z.B. den Aussparungen des Kühlflügels (40), in den Ecken an den Hohlprofilen (30) oder zum Sammler (12) und/oder Verteiler (14) durch das Einlegen von elektrisch isolierenden Streifen, z.B. aus Kunststoff, gegenüber dem Kühlmodul (10) isoliert sind.

## Claims

1. A method for the manufacture of a battery cell cooling module (10) in the form of a body having an inner space (24) for the reception of battery cells (22), wherein the body has one or more cooling passages (20) extending in parallel with one another between an inlet region and an outlet region and is formed at least partly from a length or from a plurality of lengths of a hollow section (30), wherein at least two hollow sections (30) are used which are configured to be connected to one another at their longitudinal sides, wherein the body of the cooling module (10) is of the shape of a parallelepiped and has a liquid cooling at at least three consecutive sides, wherein the or each length of hollow section (30) is bent at at least two positions (42) into a U-shape, or wherein hollow sections (30) are bonded, brazed or welded at their mutually abutting ends in a fluid conducting manner, or wherein consecutive hollow sections (30) are mutually connected to one another in a fluid conducting manner by means of arc elements in order to form at least two corners, **characterized in that**
- either the cooling module (10) is subsequently provided with sheet metal connection plates (26) which are attached to the hollow sections at at least two oppositely disposed sides of the cooling module (10) and preferably at three sides of the cooling module (10) in a heat conducting manner and which form compartments (24) between one another which are dimensioned for the reception of the battery cells (22), and wherein the sheet metal connection plates (26) lie in parallel planes and the cooling passages (20) preferably run in parallel with the parallel planes,
- or the length of hollow section (30) has at least one cooling wing (40), wherein the cooling wing (40) is notched at positions (42) at which the length of hollow section (30) is bent.

2. A method in accordance with claim 1, wherein the hollow sections (30) are connected to one another by bonding and/or by brazing and/or by welding and/or pressing and/or screwing/clamping and/or gripping and/or by means of clinching and/or by means of a tongue and groove connection (34, 36).

3. A method in accordance with claim 1, wherein, on the use of a plurality of lengths of hollow sections (30), they are bent prior to or after their connection.

4. A method in accordance with at least one of the preceding claims, wherein the sheet metal connection plates (26) are inserted into guide grooves (28) extending in the longitudinal direction of the length of hollow section (30); and/or wherein the sheet metal connection plates are attached at the guide grooves (28) by brazing, welding, bonding, frictional forces or in a different manner.

5. A method in accordance with at least one of the preceding claims, wherein a distributor (12) is provided in the inlet region, the distributor being arranged perpendicular to the individual cooling passages (20) and distributing a coolant into the individual cooling passages (20) during operation; and/or wherein a collector (14) is provided in the outlet region, the collector being arranged perpendicular to the cooling passages (20) and receiving the coolant from the individual cooling passages (20) and guiding the coolant to an outlet (18) during operation; and/or wherein the distributor (12) and/or the collector (14) are attached to the hollow section (30) and/or the hollow sections (30) by welding, brazing, bonding or in a different manner, for example by a crimped connection, and can in particular be additionally screwed to the hollow section (30) and/or the hollow sections (30).

6. A method in accordance with at least one of the preceding claims, wherein the hollow section (30) is post-treated by an anodic treatment method and/or a powder coating method or a different coating method and is thereby electrically insulated and protected.

7. A battery cell cooling module (10) in the form of a body having an inner space (24) for the reception of battery cells (22), wherein the body has one or more cooling passages (20) extending in parallel with one another between an inlet region and an outlet region and is formed at least partly from a length or from a plurality of lengths of a hollow section (30), wherein at least two hollow sections (30) are provided which are connected to one another at their longitudinal sides,
wherein the body of the cooling module (10) is of the shape of a parallelepiped and has a liquid cooling at at least three consecutive sides, wherein the or each length of hollow section (30) is bent at at least two positions (42) into a U-shape; or wherein hollow sections (30) are bonded, brazed or welded at their mutually abutting ends in a fluid conducting manner; or wherein consecutive hollow sections (30) are mutually connected to one another in a fluid conducting manner by means of arc elements in order to form at least two corners, **characterized in that**
- either the cooling module (10) is provided with sheet metal connection plates (26) which are attached to the hollow sections at at least two oppositely disposed sides of the cooling module (10) in a heat conducting manner and are preferably attached at three sides of the cooling module (10) and form compartments (24) between one another which are dimensioned for the reception of battery cells (22), and wherein the sheet metal connection plates (26) lie in parallel planes and the cooling passages (20) preferably run in parallel with the parallel planes,
- or the length of hollow section (30) has at least one cooling wing (40), wherein the cooling wing (40) is notched at positions (42) at which the length of hollow section (30) is bent.

8. A battery cell cooling module (10) in accordance with claim 7, wherein the hollow sections (30) are connected to one another by bonding and/or by brazing and/or by welding and/or pressing and/or screwing/clamping and/or gripping and/or by means of clinching and/or by means of a tongue and groove connection (34, 36).

9. A battery cell cooling module (10) in accordance with claim 7 or claim 8, wherein the sheet metal connection plates (26) are inserted into guide grooves (28) extending in the longitudinal direction of the length of hollow section (30), and/or wherein the sheet metal connection plates are attached at the guide grooves (28) by brazing, welding, bonding, frictional forces or in a different manner.

10. A battery cell cooling module (10) in accordance with at least one of the preceding claims 7 to 9, wherein a distributor (12) is provided in the inlet region, with the distributor being arranged perpendicular to the individual cooling passages (20) and distributing a coolant into the individual cooling passages (20) during operation; and/or wherein a collector (14) is provided in the outlet region, with the collector being arranged perpendicular to the cooling passages (20) and receiving and guiding the coolant from the individual cooling passages (20) to an outlet (18) during operation; and/or wherein the distributor (12) and/or the collector (14) are attached to the hollow section (30) or to the hollow sections (30) by welding, brazing or bonding or in a different manner, for example by a crimped connection and are in particular additionally screwed to the hollow section (30) or to the hollow sections (30).

11. A battery cell cooling module (10) in accordance with at least one of the preceding claims 7 to 10, wherein the cooling module is anodized and/or powder coated.

12. A battery cell cooling module in accordance with claim 7 or a claim dependent thereon having at least one cooling wing (40), wherein the space formed between the cooling wings and the battery cells (22) is filled with an insert (64) which has one of the following functions: a heat conducting function, a fire-resistant function, and a mechanically supporting function; wherein the insert can be laid into, bonded to, welded to, brazed to, or connected to the battery cell (22) and/or to the hollow section (30) by means of a different method.

13. A battery cell cooling module in accordance with at least one of the preceding claims 7 to 11, wherein the bent hollow section (30) is stabilized by a support section (66), e.g. a fiber-reinforced plastic tube (60), at the front ends of the cooling module (10).

14. A battery cell cooling module in accordance with at least one of the preceding claims 7 to 13, wherein the battery cell (22) is electrically insulated in the support region at the hollow section (30) with respect to the hollow section (30), e.g. by a self-adhesive foil or a coating.

15. A batter cell cooling module in accordance with at least one of the preceding claims 7 to 14, wherein the battery cells (22) are insulated in regions with respect to the cooling module (10), e.g. at the recesses of the cooling wings (40), in the edges at the hollow sections (30) or with respect to the collector (12) and/or the distributor (14) by the insertion of electrically insulating strips, e.g. of plastic.

## Revendications

1. Procédé de fabrication d'un module de refroidissement (10) pour cellules de batterie sous la forme d'un corps avec une chambre intérieure (24) pour la réception de cellules de batterie (22), dans lequel le corps comporte, entre une zone d'entrée et une zone de sortie, un ou plusieurs passages de refroidissement (20) s'étendant parallèlement les uns aux autres, et est formé au moins partiellement à partir d'une longueur ou de plusieurs longueurs d'un profilé creux (30), dans lequel on utilise au moins deux profilés creux (30) qui sont réalisés en vue d'être reliés l'un à l'autre au niveau de leurs côtés longitudinaux, dans lequel le corps du module de refroidissement (10) a une forme parallélépipédique et comporte un refroidissement par liquide sur au moins trois côtés mutuellement successifs, dans lequel la ou chaque longueur de profilé creux (30) est recourbée en au moins deux emplacements (42) sous une forme en U, ou dans lequel des profilés creux (30) sont collés, brasés ou soudés les uns aux autres à leurs extrémités mutuellement bout-à-bout de manière à conduire des fluides, ou dans lequel des profilés creux mutuellement successifs (30) sont fermés les uns contre les autres au moyen d'éléments en arc, de manière à conduire des fluides, afin de réaliser au moins deux coins,
**caractérisé en ce que**
- soit le module de refroidissement (10) est ensuite doté de tôles de liaison (26), qui sont rapportées au moins sur deux côtés opposés du module de refroidissement (10) contre les profilés creux et sont rapportées de préférence sur trois côtés du module de refroidissement (10) contre les profilés creux de manière à conduire la chaleur, et forment entre elles des compartiments (24) dimensionnés en vue de recevoir des cellules de batterie (22), et dans lequel les tôles de liaison (26) sont situées dans des plans parallèles, et les passages de refroidissement (20) s'étendent de préférence parallèlement aux plans parallèles,
- soit la longueur de profilé creux (30) comporte au moins une ailette de refroidissement (40), et l'ailette de refroidissement (40) est décollée aux emplacements (42) auxquels la longueur de profilé creux (30) est recourbée.

2. Procédé selon la revendication 1, dans lequel les profilés creux (30) sont reliés les uns aux autres par collage et/ou par brasage et/ou par soudure et/ou par pressage et/ou par vissage/coincement et/ou par enserrage et/ou au moyen d'assemblages traversants et/ou au moyen d'une liaison à rainure-et-languette (36, 34).

3. Procédé selon la revendication 1, dans lequel en cas d'utilisation de plusieurs longueurs de profilés creux (30) celles-ci sont recourbées avant ou après leur liaison.

4. Procédé selon l'une au moins des revendications précédentes, dans lequel les tôles de liaison (26) sont mises en place dans des gorges de guidage (28) qui s'étendent en direction longitudinale des longueurs de profilé creux (30), et/ou les tôles de liaison sont fixées dans les gorges de guidage (28) par brasage, par soudage, par collage, par des forces de friction ou d'une autre manière.

5. Procédé selon l'une au moins des revendications précédentes,
dans lequel il est prévu, dans la zone d'entrée, un distributeur (12) qui se dresse perpendiculairement aux passages de refroidissement individuels (20) et qui distribue en fonctionnement un agent de refroidissement vers les passages de refroidissement individuels (20), et/ou en ce qu'il est prévu dans la zone de sortie un collecteur (14) qui se dresse perpendiculairement aux passages de refroidissement (20) et qui reçoit en fonctionnement l'agent de refroidissement provenant des passages de refroidissement individuels (20) et le mène à une sortie (18), et/ou dans lequel le distributeur (12) et/ou le collecteur (14) est fixé sur le profilé creux (30) ou sur les profilés creux (30) par soudage, par brasage, par collage ou d'une autre manière, par exemple au moyen de liaisons à écrasement, et peut en particulier être vissé en supplément.

6. Procédé selon l'une au moins des revendications précédentes, dans lequel le profilé creux (30) est postérieurement traité par une procédure d'anodisation ou une procédure de revêtement à base de poudre, ou une autre procédure de revêtement, et par conséquent électriquement isolé et protégé.

7. Module de refroidissement (10) pour cellules de batterie sous la forme d'un corps avec une chambre intérieure (24) pour recevoir des cellules de batterie (22), dans lequel le corps comporte, entre une zone d'entrée et une zone de sortie, un ou plusieurs passages de refroidissement (20) qui s'étendent parallèlement les uns aux autres, et est formé au moins partiellement d'une longueur ou de plusieurs longueurs d'un profilé creux (30), dans lequel il est prévu au moins deux profilés creux (30), qui sont reliés l'un à l'autre au niveau de leurs côtés longitudinaux,
dans lequel le corps du module de refroidissement (10) a une forme parallélépipédique et comportent un refroidissement par liquide sur au moins trois côtés mutuellement successif, dans lequel la ou chaque longueur de profilé creux (30) est recourbée dans une forme en U à au moins deux emplacements (42), ou dans lequel des profilés creux (30) sont collés, brasés ou soudés les uns aux autres à leurs extrémités mutuellement bout-à-bout de manière à conduire des fluides, ou dans lequel des profilés creux (30) qui se suivent mutuellement sont raccordés les uns aux autres au moyen d'éléments en arc, de manière à conduire des fluides, afin de réaliser au moins deux coins, **caractérisé en ce que**
- soit le module de refroidissement (10) est doté de tôles de liaison (26), qui sont rapportées au moins sur deux côtés opposés du module de refroidissement (10) contre les profilés creux et sont rapportées de préférence sur trois côtés du module de refroidissement (10) contre les profilés creux de manière à conduire la chaleur, et forment entre elles des compartiments (24) dimensionnés en vue de recevoir des cellules de batterie (22), et dans lequel les tôles de liaison (26) sont situées dans des plans parallèles, et les passages de refroidissement (20) s'étendent de préférence parallèlement aux plans parallèles,
- soit la longueur de profilé creux (30) comporte au moins une ailette de refroidissement (40), et l'ailette de refroidissement (40) est décollée aux emplacements (42) auxquels la longueur de profilé creux (30) est recourbée.

8. Module de refroidissement (10) pour cellules de batterie selon la revendication 7, dans lequel les profilés creux (30) sont reliés les uns aux autres par collage et/ou par brasage et/ou par soudure et/ou par pressage et/ou par vissage/coincement et/ou par enserrage et/ou au moyen d'assemblages traversants et/ou au moyen d'une liaison à rainure-et-languette (36, 34).

9. Module de refroidissement (10) pour cellules de batterie selon l'une au moins des revendications 7 ou 8, dans lequel les tôles de liaison (26) sont mises en place dans des gorges de guidage (28) qui s'étendent en direction longitudinale des longueurs de profilé creux (30), et/ou les tôles de liaison sont fixées dans les gorges de guidage (28) par brasage, par soudage, par collage, par des forces de friction ou d'une autre manière.

10. Module de refroidissement (10) pour cellules de batterie selon l'une au moins des revendications précédentes 7 à 9, dans lequel il est prévu, dans la zone d'entrée, un distributeur (12) qui se dresse perpendiculairement aux passages de refroidissement individuels (20) et qui distribue en fonctionnement un agent de refroidissement vers les passages de refroidissement individuels (20), et/ou en ce qu'il est prévu dans la zone de sortie un collecteur (14) qui se dresse perpendiculairement aux passages de refroidissement (20) et qui reçoit en fonctionnement l'agent de refroidissement provenant des passages de refroidissement individuels (20) et le mène à une sortie (18), et/ou dans lequel le distributeur (12) et/ou le collecteur (14) est fixé sur le profilé creux (30) ou sur les profilés creux (30) par soudage, par brasage, par collage ou d'une autre manière, par exemple au moyen de liaisons à écrasement, et peut en particulier être vissé en supplément.

11. Module de refroidissement (10) pour cellules de batterie selon l'une au moins des revendications précédentes 7 à 10, dans lequel le module de refroidissement est anodisé et/ou revêtu d'un revêtement à base de poudre.

12. Module de refroidissement pour cellules de batterie selon la revendication 7 ou selon une revendication dépendante de celle-ci, comprenant au moins une ailette de refroidissement (40), dans lequel la chambre formée entre les ailettes de refroidissement et les cellules de batterie (22) est remplie avec un insert (64) qui a l'une des fonctions suivantes : une fonction de conduction thermique, une fonction de protection anti-incendie, et une fonction de soutien mécanique, dans lequel l'insert est mis en place, collé, soudé, brasé ou relié à la cellule de batterie (22) et/ou au profilé creux (30) au moyen d'un autre procédé.

13. Module de refroidissement pour cellules de batterie selon l'une au moins des revendications précédentes 7 à 11, dans lequel le profilé creux cintré (30) est stabilisé par un profilé de soutien (66) aux extrémités antérieures du module de refroidissement (10), par exemple un tube en matière plastique renforcée par des fibres (60).

14. Module de refroidissement pour cellules de batterie selon l'une au moins des revendications précédentes 7 à 13, dans lequel la cellule de batterie (22) est isolée électriquement par rapport au profilé creux (30) dans les zones de contact contre le profilé creux (30), par exemple au moyen d'une feuille autocollante ou d'un revêtement.

15. Module de refroidissement pour cellules de batterie selon l'une au moins des revendications précédentes 7 à 14, dans lequel les cellules de batterie (22) sont isolées par rapport au module de refroidissement (10), dans des zones, comme par exemple les échancrures de l'ailette de refroidissement (40), dans les coins sur les profilés creux (30) ou par rapport au collecteur (12) et/ou au distributeur, par l'introduction de bandes électriquement isolantes, par exemple en matière plastique.
